# EUROPEAN PATENT APPLICATION

(11) **EP 4 489 215 A1**
(43) Date of publication of application: **08.01.2025**
(21) Application number: 22932683.0
(22) Date of filing: 24.03.2022
(51) Int. Cl.: H01M 50/574, H01M 50/583, H01M 50/519

(54) **BATTERY AND ELECTRONIC DEVICE**

(71) Applicant: Ningde Amperex Technology Limited, Ningde, Fujian 352100 (CN)
(72) Inventor: ZHANG, Jinming, Ningde, Fujian 352100 (CN)
(74) Representative: Icosa
(86) International application number: PCT/CN2022/082851
(87) International publication number: WO 2023/178618

(57) **Abstract**

This application provides a battery and an electronic device. The battery includes an electrode assembly, a shell, a first bonding member, a second bonding member, and a protection device. The electrode assembly includes a first tab. The shell includes a first main body part and a side edge part connected to the first main body part, and the side edge part includes a first wall surface and a second wall surface. The first bonding member includes a first bonding surface and a second bonding surface disposed opposite each other. The protection device includes a first part and a second part, where the first part is bonded to the second bonding surface, and the second part is welded to a part of the first tab extending out of the shell and then bent to be stacked with the first part. A third part of the second bonding member is bonded to a surface of the first part facing the second part, and the fourth part of the second bonding member is bonded to the second bonding surface. A bonding mode of the second bonding member in this application can improve the bonding reliability of the first part, reduce the possibility of the first part separating from the second bonding surface, and improve the connection reliability between the protection device and the shell.

## Description

### TECHNICAL FIELD

This application relates to the electrochemical field, and in particular, to a battery and an electronic device.

### BACKGROUND

To prevent damage caused by abnormal temperature, charge/discharge voltage, or charge/discharge current, a battery is additionally provided with a protection device. The protection device can disconnect a circuit of the battery under the above abnormal conditions to protect the battery. A connection structure between an existing protection device and a battery cell is not stable enough.

### SUMMARY

The main technical problem solved by some embodiments of this application is to provide a battery and an electronic device, which can make connection of a protection device more stable.

To solve the above technical problem, a technical solution used in this application is as follows: A battery is provided, where the battery includes an electrode assembly, a shell, a first bonding member, a second bonding member, and a protection device. The electrode assembly includes a first tab. The shell includes a first main body part and a side edge part connected to the first main body part, where the electrode assembly is accommodated in the first main body part, a first tab passes through the side edge part and extends out of the shell, and the side edge part includes a first wall surface and a second wall surface distributed opposite each other along its thickness direction. The first bonding member includes a first bonding surface and a second bonding surface disposed opposite each other, the first bonding surface being bonded to the first wall surface. The protection device is bonded to the second bonding surface, the protection device includes a second main body part and a first connecting part electrically connected to the second main body part, the first connecting part includes a first part and a second part, the first part is bonded to the second bonding surface, and the second part is connected to a part of the first tab extending out of the shell and then bent to be stacked with the first part. The second bonding member includes a third part and a fourth part connected to each other, where the third part is bonded to a surface of the first part facing the second part, and the fourth part is bonded to the second bonding surface. In the above solution, a bonding mode of the second bonding member can improve the bonding reliability of the first part, reduce the possibility of the first part separating from the second bonding surface, improve the connection reliability between the protection device and the shell, and prolong the service life of the battery.

In some embodiments, the second main body part and the first connecting part are distributed along a length direction of the side edge part, and along the length direction of the side edge part, the fourth part is bonded to a side of the first connecting part facing away from the second main body part. In the above solution, the length space of the side edge part can be fully utilized, reducing the size of the side edge part along a direction Y, thereby reducing the overall size of the battery.

In some embodiments, along the length direction of the side edge part, a size H₁ of the fourth part satisfies 7 mm ≤ H₁ ≤ 12 mm. In the above solution, a bonding size between the first bonding member and the second bonding member can provide an appropriate bonding force, thereby prolonging the bonding life between the first bonding member and the second bonding member. In addition, the second bonding member can also have an appropriate size, reducing materials used for the second bonding member and lowering material costs.

In some embodiments, the third part is at least partially bonded to a wall surface of the second main body part facing away from the first wall surface. In the above solution, the third part can simultaneously cover at least part of the second main body part to achieve the purpose of protecting the second main body part.

In some embodiments, a surface of the second bonding member facing away from the first wall surface has adhesiveness, and a wall surface of the third part facing the second part is bonded to the second part. In the above solution, the fixation effect of the second bonding member on the first connecting part can be improved, and the probability of separation between the second part and the third part can be effectively reduced.

In some embodiments, the protection device further comprises a second connecting part electrically connected to the second main body part, and the second connecting part is connected to the second bonding surface. The battery further includes a third connecting part and a third bonding member. The third connecting part has an end electrically connected to the second connecting part and another end extending to a side of the side edge part facing away from the first main body part. The third bonding member includes a fifth part and a sixth part connected to each other, where the fifth part is bonded to a position where the third connecting part is connected to the second connecting part, and the sixth part is bonded to the second bonding surface. In the above solution, the third bonding member can improve the bonding effect on a second combination part, effectively reducing the probability of the second combination part separating from the shell.

In some embodiments, the second main body part and the second connecting part are distributed along the length direction of the side edge part, and along the length direction of the side edge part, the sixth part is bonded to a side of the second connecting part facing away from the second main body part. In the above solution, the length space of the side edge part can be fully utilized, reducing the size of the side edge part along the direction Y, thereby reducing the overall size of the battery.

In some embodiments, along the length direction of the side edge part, a size H₂ of the sixth part satisfies 7 mm ≤ H₂ ≤ 12 mm. In the above solution, a bonding size between the first bonding member and the third bonding member can provide an appropriate bonding force, thereby prolonging the bonding life between the first bonding member and the third bonding member. In addition, the third bonding member can also have an appropriate size, reducing materials used for the third bonding member and lowering material costs.

In some embodiments, the second bonding member and the third bonding member are integrally connected. In the above solution, the processing procedures can be reduced, and the processing efficiency can be improved. In addition, the overall bonding difficulty of the second bonding member and the third bonding member can also be reduced, and positioning times during bonding (when the second bonding member and the third bonding member serve as an entirety, the bonding step can be completed by just performing positioning once) can be reduced.

In some embodiments, the battery further includes a fourth bonding member, the fourth bonding member includes a seventh part and an eighth part connected to each other, the seventh part is bonded to the second wall surface, and the eighth part covers and is bonded to a surface of the first tab facing away from the second bonding surface. In the above solution, the fixation effect on the protection device can be further improved. A structure of the fourth bonding member covering a part of the first tab extending out of the side edge part can further protect the first tab and prevent the first tab from being exposed, thereby reducing the risk of short circuit due to contact between the first tab and the shell.

In some embodiments, the eighth part is at least partially bonded to the second bonding surface. In the above solution, the bonding effect of the fourth bonding member can be improved, thereby reducing the risk of the fourth bonding member separating from the side edge part.

In some embodiments, the fourth bonding member further includes a ninth part connected to the seventh part, and the ninth part is bonded to a surface of the sixth part facing away from the second bonding surface. In the above solution, the bonding effect on the third connecting part can be further improved, thereby preventing the third connecting part from separating from the first bonding member due to the separation of the third bonding member from the first bonding member.

In some embodiments, the ninth part is at least partially bonded to the second bonding surface. In the above solution, the bonding effect of the fourth bonding member can be further improved.

In some embodiments, the battery further includes a fifth bonding member, the fifth bonding member includes a tenth part and an eleventh part connected to each other, the tenth part covers and is bonded to a wall surface of the protection device facing away from the second bonding member, and is bonded to the second bonding surface, and the eleventh part is bonded to the second wall surface. In the above solution, the connection reliability of the protection device can be improved, further reducing the probability of the protection device separating from the shell.

In some embodiments, the eleventh part covers and is bonded to a surface of the first tab facing away from the second bonding member. In the above solution, the bonding effect of the fifth bonding member can be further improved.

A second aspect of this application further provides an electronic device including the battery according to any one of the foregoing embodiments.

In the battery provided in this application, the protection device is bonded to the side edge part of the shell, the first part of the first connecting part of the protection device is bonded to the second bonding surface of the first bonding member, and the second part of the first connecting part is welded to the part of the first tab extending out of the shell and then bent to be stacked with the first part. Particularly, in this application, the second bonding member is disposed between the first part and second part of the first connecting part, the third part of the second bonding member is bonded to the surface of the first part facing away from the second bonding member, and the fourth part of the second bonding member is bonded to the second bonding surface. In this solution, the bonding mode of the second bonding member can improve the bonding reliability of the first part, reduce the possibility of the first part separating from the second bonding surface, improve the connection reliability between the protection device and the shell, and prolong the service life of the battery.

### BRIEF DESCRIPTION OF DRAWINGS

To describe the technical solutions in some embodiments of this application more clearly, the following briefly describes the accompanying drawings required for describing these embodiments of this application. Apparently, the accompanying drawings in the following description show merely some embodiments of this application, and persons of ordinary skill in the art may still derive other drawings from the accompanying drawings without creative efforts.
FIG. 1 is a schematic side view of a battery observed along a reverse direction of direction Z according to a first embodiment of this application, where a second part is not bent to be stacked with a first part, and a second bonding member is not shown;
FIG. 2 is a partial view of FIG. 1;
FIG. 3 is a schematic side view of a side edge part of the battery observed along the reverse direction of direction Z according to the first embodiment of this application, where the second part is not bent to be stacked with the first part;
FIG. 4 is a schematic cross-sectional view of the side edge part of the battery in FIG. 3 taken along direction M-M;
FIG. 5 is a schematic side view of the side edge part of the battery observed along the reverse direction of direction Z according to the first embodiment of this application;
FIG. 6 is a schematic cross-sectional view of the side edge part of the battery in FIG. 5 taken along direction N-N;
FIG. 7 is a schematic side view of a side edge part of a battery observed along a reverse direction of direction Z according to a second embodiment of this application;
FIG. 8 is a schematic side view of a side edge part of a battery observed along a reverse direction of direction Z according to a third embodiment of this application;
FIG. 9 is a schematic side view of the side edge part of the battery observed along direction Z according to the third embodiment of this application;
FIG. 10 is a schematic side view of a side edge part of a battery observed along a reverse direction of direction Z according to a fourth embodiment of this application; and
FIG. 11 is a schematic side view of the side edge part of the battery observed along direction Z according to the fourth embodiment of this application.

### DESCRIPTION OF EMBODIMENTS

For ease of understanding this application, the following further describes this application in detail with reference to the accompanying drawings and specific embodiments. It should be noted that when a component is deemed as being "fixed to" another component, it may be directly fixed to the another component, or there may be one or more components in between. When a component is deemed as being "connected to" another component, it may be directly connected to the another component, or there may be one or more components in between. The terms "vertical", "horizontal", "left", "right", and similar expressions used in this specification are merely for description purposes.

Unless otherwise defined, all technical and scientific terms used in this specification shall have the same meanings as commonly understood by persons skilled in the art to which this application pertains. The terms used in this specification of this application are for description of specific embodiments only without any intention to limit this application. The term "and/or" used in this specification includes any and all combinations of one or more associated items that are listed.

A protection device of a battery is configured to protect charge/discharge of the battery, and when the charge/discharge of the battery is abnormal, the protection device can disconnect a circuit of the battery. In related art, the protection device is connected to a battery cell of the battery, and the protection device includes a main body part and two connecting parts connected to the main body part (that is, the first connecting part and the second connecting part mentioned below). A circuit is disposed in the main body part for monitoring and controlling voltage or circuit during charge/discharge. The first connecting part of the protection device is configured to be electrically connected to one tab of the battery cell, and the second connecting part is configured to be electrically connected to a connecting piece. The connecting piece is used to replace the above tab, thereby leading out the current in the battery cell. When a closed circuit is formed in the main body part of the protection device, the electrical energy of the battery cell can be led out by the connecting piece and another tab. When an open circuit is formed in the main body part of the protection device, an open circuit is formed in the entire battery.

Regarding the fixation of the protection device, the applicant preliminarily has believed that to fix the protection device on a shell of the battery cell, a first bonding member may be bonded to a side edge part of the shell, and double surfaces of the first bonding member are bonding. The protection device is bonded to a bonding surface of the first bonding member facing away from the side edge part. The first connecting part of the protection device includes a first part and a second part, the first part is bonded to the first bonding member, and the second part extends out of the side edge part and is welded to one tab of the battery cell (the second part extending out of the side edge part for welding is because the second part extending out of the side edge part to be stacked with the tab allows a welding device to apply pressure during welding of the two after clamping the two, thereby improving the stability during welding). When the two are welded (for ease of description, an entirety formed after welding the second part to the tab is hereinafter referred to as a first combination part), and the first combination part is bent to be stacked with the first part. To reduce the probability of the first connecting part of the protection device separating from the first bonding member, a second bonding member may be bonded to a surface of the first combination part facing away from the first bonding member, where one part of the second bonding member is bonded to the first combination part, and another part of the second bonding member is bonded to the first bonding member.

The applicant has further found that when the above structure is used to fix the protection device, due to a thick part on the first connecting part, a three-layer structure formed by the first part, the second part, and the tab is provided along a thickness direction of the side edge part. This makes a gap likely to be present between the second bonding member and the first bonding member at a boundary position of the three-layer structure. Therefore, the second bonding member is less likely to be tightly attached to the first bonding member. Due to the above problem, after the battery has been used for a period of time, the second bonding member is likely to gradually separate from the first bonding member by starting from the boundary position, ultimately making the second bonding member fail to fix the first connecting part, causing the first connecting part to ultimately separate from the first bonding member, thereby making the protection device separate from the first bonding member. Therefore, the above solution still makes it difficult to achieve good fixation on the protection device.

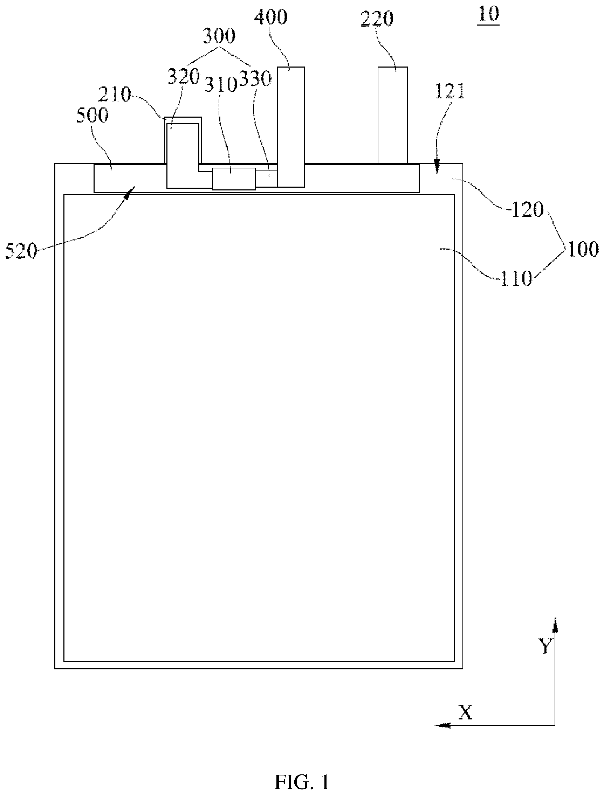

In view of this, referring to FIGs. 1 to 11, an embodiment of this application provides a battery 10. The battery 10 includes an electrode assembly, a shell 100, a first bonding member 500, a second bonding member 600, and a protection device 300. The battery 10 can improve the connection reliability of the protection device 300.

The electrode assembly includes a first tab 210, a second tab 220, and a current collector assembly. The current collector assembly includes at least two current collectors having different polarities. The first tab 210 is electrically connected to one current collector, and the second tab 220 is electrically connected to another current collector, so that the first tab 210 and the second tab 220 have different polarities. The battery 10 can lead out its internal electrical energy through the first tab 210 and the second tab 220.

The shell 100 includes a first main body part 110 and at least one side edge part 120 connected to the first main body part 110. The first main body part 110 defines an accommodating cavity, and the electrode assembly is accommodated in the accommodating cavity. The side edge part 120 is located at a side edge of the first main body part 110, and the side edge part 120 is configured to seal the shell 100, thereby ensuring the airtightness of the accommodating cavity of the first main body part 110. The shell 100 may have a plurality of side edge parts 120, and in this application, a structure of one side edge part 120 is described.

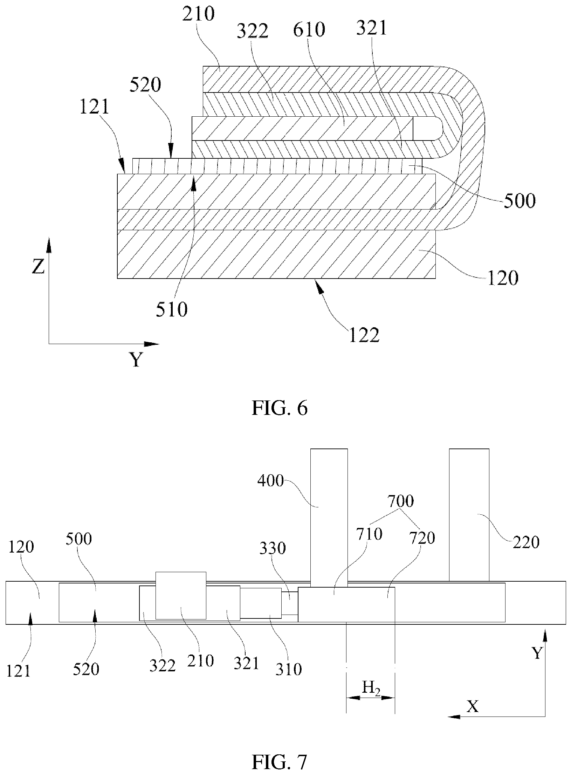

After the electrode assembly is disposed in the first main body part 110, the first tab 210 and the second tab 220 both pass through the side edge part 120 and extend out of the shell 100. The first tab 210 and the second tab 220 may extend out of the shell 100 from one side edge part 120 of the shell 100, or the two may extend out of the shell 100 from two different side edge parts 120 of the shell 100, respectively. Referring to FIGs. 1 to 3, in this application, the first tab 210 and the second tab 220 both extend out of the shell 100 from one side edge part 120. The side edge part 120 includes a first wall surface 121 and a second wall surface 122 distributed opposite each other along its thickness direction (that is, direction Z in FIG. 6).

The first bonding member 500 has double surfaces with adhesiveness, that is, the first bonding member 500 includes a first bonding surface 510 and a second bonding surface 520 disposed opposite each other. The first bonding surface 510 of the first bonding member 500 is bonded to the first wall surface 121, and the second bonding surface 520 is used for bonding the protection device 300.

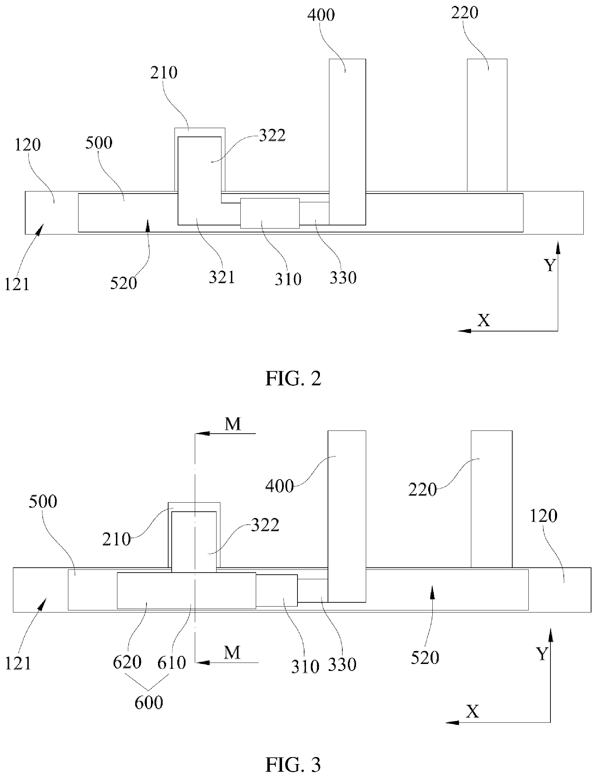

The protection device 300 is bonded to the second bonding surface 520 (indicating that at least part of a position of the protection device 300 is bonded to the second bonding surface 520). The protection device 300 includes a second main body part 310 and a first connecting part 320 and second connecting part 330 electrically connected to the second main body part 310. Referring to FIGs. 1 and 2, the first connecting part 320 includes a first part 321 and a second part 322. The first part 321 is bonded to the second bonding surface 520. The second part 322 and a part of the first tab 210 extending out of the shell 100 are stacked and then connected to each other, and the two may specifically be welded to each other. After the second part 322 and the part of the first tab 210 extending out of the shell 100 are welded to each other, the two are bent to be stacked with the first part 321. For ease of description, an entirety formed after the second part 322 and the part of the first tab 210 extending out of the shell 100 are welded to each other is hereinafter referred to as a first combination part. It should be noted that the structure shown in FIGs. 1 and 2 is a structure in which the first combination part is not bent to be stacked with the first part 321 after the second part 322 is connected to the first tab 210.

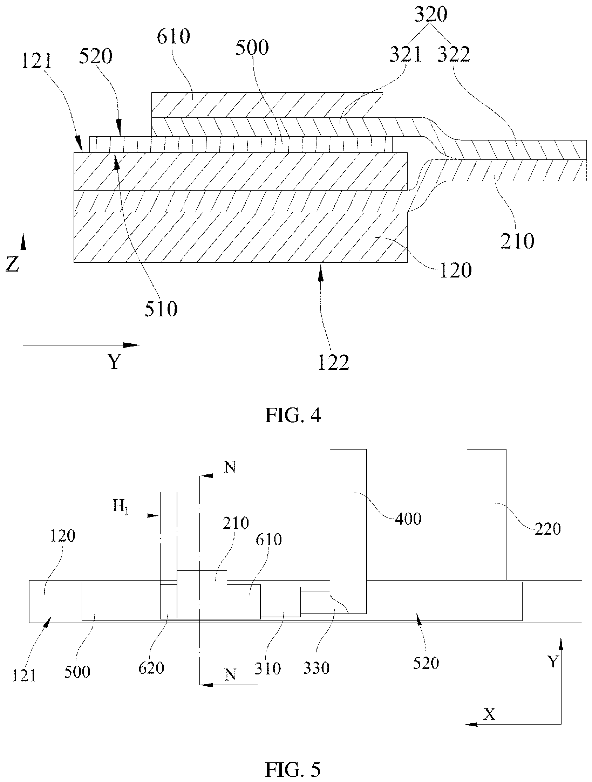

The second bonding member 600 includes a third part 610 and a fourth part 620 connected to each other. Particularly, in this application, before the first combination part is bent to be stacked with the first part 321, the third part 610 of the second bonding member 600 is bonded to a surface of the first part 321 facing the second part 322, and the fourth part 620 is bonded to the second bonding surface 520 (refer to FIGs. 3 and 4 for specific structure). After the second bonding member 600 is bonded, the first combination part is bent to be attached to a surface of the second bonding member 600 facing away from the first bonding member 500, so that the first bonding member 500, the first part 321 of the first connecting part 320, the third part 610 of the second bonding member 600, the second part 322 of the first connecting part 320, and a part of the first tab 210 connected to the second part 322 (five parts in total) are stacked together along direction Z (refer to FIGs. 5 and 6 for specific structure).

In the battery 10 of this application, the second bonding member 600 is bonded to a surface of the first part 321 facing away from the first bonding member 500 before the first combination part is bent to be stacked with the first part 321, so that the bonding reliability between the first part 321 and the first bonding member 500 can be improved. In addition, since the second bonding member 600 and the first bonding member 500 are separated by only one component which is the first part 321, and the thickness of the boundary position of the first part 321 is small, a smaller gap is present between the first bonding member 500 and the second bonding member 600 at the boundary position. The first bonding member 500 can be tightly bonded and fixed to the second bonding member 600, such that the two are less likely to separate, thereby improving the connection reliability of the second bonding member 600 on the protection device 300, reducing the probability of the protection device 300 separating from the shell 100, and prolonging the service life of the battery 10.

An arrangement direction of the first connecting part 320 and second main body part 310 of the protection device 300 is determined according to specific requirements. In an embodiment, the first connecting part 320 and second main body part 310 of the protection device 300 may be arranged along a direction Y (the direction Y is perpendicular to the length of the side edge part 120). In another embodiment, the second main body part 310 and the first connecting part 320 are arranged along a direction inclined to both the direction Y and a direction X. In an embodiment, referring to FIGs. 1 to 6, the second main body part 310 and the first connecting part 320 are distributed along a length direction of the side edge part 120 (that is, the direction X). In this solution, the length space of the side edge part 120 can be fully utilized, reducing the size of the side edge part 120 along the direction Y, thereby reducing the overall size of the battery 10.

A bonding position of the fourth part 620 of the second bonding member 600 relative to the first part 321 is determined according to specific requirements. In an embodiment, the fourth part 620 and the first connecting part 320 are distributed along the direction Y, that is, the fourth part 620 is bonded between the first connecting part 320 and the first main body part 110. In an embodiment, referring to FIGs. 5 and 6, along the length direction of the side edge part 120 (that is, the direction X), the fourth part 620 is bonded to a side of the first connecting part 320 facing away from the second main body part 310. In other words, the fourth part 620 and the first connecting part 320 are arranged along the direction X. In this solution, the length space of the side edge part 120 can be fully utilized, reducing the size of the side edge part 120 along the direction X, thereby reducing the overall size of the battery 10. In an embodiment, the fourth part 620 may alternatively have a part distributed with the first part 321 along the direction X and a part distributed with the first part 321 along the direction Y

The applicant has found that a bonding size between the second bonding member 600 and the first bonding member 500 affects the bonding force and bonding life between the two. When the bonding size between the first bonding member 500 and the second bonding member 600 is large, the bonding force between the two is high, and the bonding life between the two is long. In view of this, in an embodiment, referring to FIG. 5, along the length direction of the side edge part 120 (that is, the direction X), a size H₁ of the fourth part 620 satisfies 7 mm ≤ H₁ ≤ 12 mm. For example, H₁ may be 7 mm, 8 mm, 9 mm, 10 mm, 11 mm, or 12 mm. In this solution, the bonding size between the first bonding member 500 and the second bonding member 600 can provide an appropriate bonding force, thereby prolonging the bonding life between the first bonding member 500 and the second bonding member 600. In addition, the second bonding member 600 can also have an appropriate size, reducing materials used for the second bonding member 600 and lowering material costs.

The third part 610 of the second bonding member 600 can be bonded only to the surface of the first part 321 facing away from the first bonding member 500. In an embodiment, referring to FIG. 6, the third part 610 can be at least partially bonded to a wall surface of the second main body part 310 facing away from the first wall surface 121. In this solution, the third part 610 can simultaneously cover at least part of the second main body part 310 to achieve the purpose of protecting the second main body part 310. Specifically, the third part 610 can also fully cover a surface of the second main body part 310 facing away from the first bonding member 500.

The second bonding member 600 may have one surface with adhesiveness, that is, a surface of the second bonding surface 520 facing the first part 321 has adhesiveness. In an embodiment, the second bonding member 600 may have double surfaces with adhesiveness, that is, a surface of the second bonding member 600 facing away from the first wall surface 121 also has adhesiveness, and a wall surface of the third part 610 facing the second part 322 is bonded to the second part 322. In other words, when the first combination part is bent to be stacked with the third part 610, the first combination part is bonded to a wall surface of the third part 610 facing away from the first part 321. In this solution, the fixation effect of the second bonding member 600 on the first connecting part 320 can be improved, and the probability of separation between the second part 322 and the third part 610 can be effectively reduced. Particularly, the second bonding member 600 may have double surfaces with adhesiveness only on the third part 610, or the entire second bonding member 600 may have double surfaces with adhesiveness.

The second connecting part 330 of the protection device 300 is connected to the second bonding surface 520. The battery 10 further includes a third connecting part 400, where an end of the third connecting part 400 and the second connecting part 330 are electrically connected to each other, and the two may specifically be welded to each other. For ease of description, a part of the third connecting part 400 connected to the second connecting part 330 is hereinafter referred to as a second combination part. After the third connecting part is connected to the second connecting part 330, the second connecting part 330 may be located between the third connecting part 400 and the first bonding member 500, or the third connecting part 400 may be located between the first bonding member 500 and the second connecting part 330. In this embodiment, referring to FIGs. 5 to 7, the second connecting part 330 is located between the third connecting part 400 and the first bonding member 500.

An end of the third connecting part 400 facing away from the second connecting part 330 extends to a side of the side edge part 120 facing away from the first main body part 110. Since the third connecting part 400 is electrically connected to the protection device 300, and the protection device 300 is electrically connected to the first tab 210, the third connecting part 400 is electrically connected to the first tab 210 and is connected in series with the first tab 210. The third connecting part 400 can serve as the first tab 210, that is, the third connecting part 400 can cooperate with the second tab 220 to lead out the electrical energy of the battery 10. When an abnormality occurs in the charge/discharge process of the battery 10, the protection device 300 forms an open circuit, so that a circuit between the third connecting part 400 and the first tab 210 is disconnected, thereby protecting the battery 10.

Referring to FIG. 7, the battery 10 further includes a third bonding member 700 to improve the connection reliability of the second combination part and reduce the probability of the second combination part separating from the shell 100. In an embodiment, the third bonding member 700 includes a fifth part 710 and a sixth part 720 connected to each other, the fifth part 710 is bonded to a position where the third connecting part 400 is connected to the second connecting part 330, and the sixth part 720 is bonded to the second bonding surface 520. In the above solution, the third bonding member 700 can improve the bonding effect on the second combination part, effectively reducing the probability of the second combination part separating from the shell 100.

An arrangement direction of the second connecting part 330 and second main body part 310 of the protection device 300 is determined according to specific requirements. In an embodiment, the second connecting part 330 and second main body part 310 of the protection device 300 may be arranged along the direction Y (the direction Y is perpendicular to the length of the side edge part 120). In another embodiment, the second main body part 310 and the second connecting part 330 are arranged along a direction inclined to both the direction Y and the direction X. In an embodiment, referring to FIG. 6, the second main body part 310 and the second connecting part 330 are distributed along the length direction of the side edge part 120 (that is, the direction X). In this solution, the length space of the side edge part 120 can be fully utilized, reducing the size of the side edge part 120 along the direction Y, thereby reducing the overall size of the battery 10.

A bonding position of the sixth part 720 of the third bonding member 700 relative to the second connecting part 330 is determined according to specific requirements. In an embodiment, the sixth part 720 and the second connecting part 330 are distributed along the direction Y, that is, the sixth part 720 is bonded between the second connecting part 330 and the first main body part 110. In an embodiment, referring to FIGs. 5 and 6, along the length direction of the side edge part 120 (that is, the direction X), the sixth part 720 is bonded to a side of the second connecting part 330 facing away from the second main body part 310. In other words, the sixth part 720 and the second connecting part 330 are arranged along the direction X. In this solution, the length space of the side edge part 120 can be fully utilized, reducing the size of the side edge part 120 along the direction X, thereby reducing the overall size of the battery 10. In an embodiment, the sixth part 720 may alternatively have a part distributed with the second connecting part 330 along the direction X and a part distributed with the second connecting part 330 along the direction Y.

The applicant has found that a bonding size between the third bonding member 700 and the first bonding member 500 affects the bonding force and bonding life between the two. When the bonding size between the first bonding member 500 and the third bonding member 700 is large, the bonding force between the two is high, and the bonding life between the two is long. In view of this, in an embodiment, referring to FIG. 7, along the length direction of the side edge part 120 (that is, the direction X), a size H₂ of the sixth part 720 satisfies 7 mm ≤ H₂ ≤ 12 mm. For example, H₂ may be 7 mm, 8 mm, 9 mm, 10 mm, 11 mm, or 12 mm. In this solution, the bonding size between the first bonding member 500 and the third bonding member 700 can provide an appropriate bonding force, thereby prolonging the bonding life between the first bonding member 500 and the third bonding member 700. In addition, the third bonding member 700 can also have an appropriate size, reducing materials used for the third bonding member 700 and lowering material costs.

The second bonding member 600 and the third bonding member 700 may be spaced apart or connected to each other. When the second bonding member 600 and the third bonding member 700 are connected to each other, the second bonding member 600 can be bonded to a wall surface of the third bonding member 700 facing away from the first bonding member 500, or the third bonding member 700 can be bonded to a wall surface of the second bonding member 600 facing away from the first bonding member 500. In an embodiment, the third bonding member 700 and the second bonding member 600 can alternatively be integrally connected, that is, the third bonding member 700 and the second bonding member 600 serve as an entirety. In this solution, the processing procedures can be reduced, and the processing efficiency can be improved. In addition, the overall bonding difficulty of the second bonding member 600 and the third bonding member 700 can also be reduced, and positioning times during bonding (when the second bonding member 600 and the third bonding member 700 serve as an entirety, the bonding step can be completed by just performing positioning once) can be reduced.

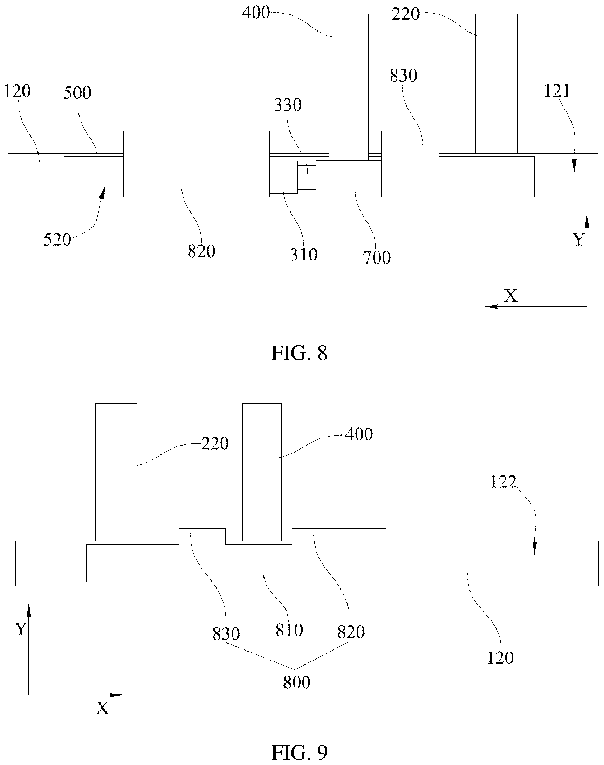

Referring to FIGs. 8 and 9, in some embodiments, the battery 10 further includes a fourth bonding member 800, where the fourth bonding member 800 includes a seventh part 810 and an eighth part 820 connected to each other, the seventh part 810 is bonded to the second wall surface 122, and the eighth part 820 covers and is bonded to a surface of the first tab 210 facing away from the second bonding surface 520. In the above solution, the fixation effect on the protection device 300 can be further improved. A structure of the fourth bonding member 800 covering a part of the first tab 210 extending out of the side edge part 120 can further protect the first tab 210 and prevent the first tab 210 from being exposed, thereby reducing the risk of short circuit due to contact between the first tab 210 and the shell 100.

In some embodiments, the eighth part 820 is at least partially bonded to the second bonding surface 520. In the above solution, the bonding effect of the fourth bonding member 800 can be improved, thereby reducing the risk of the fourth bonding member 800 separating from the side edge part 120.

In some embodiments, the fourth bonding member 800 further includes a ninth part 830 connected to the seventh part 810, and the ninth part 830 is bonded to a surface of the sixth part 720 facing away from the second bonding surface 520. In the above solution, the bonding effect on the third connecting part 400 can be further improved, thereby preventing the third connecting part 400 from separating from the first bonding member 500 due to the separation of the third bonding member 700 from the first bonding member 500.

In some embodiments, the ninth part 830 is at least partially bonded to the second bonding surface 520. In the above solution, the bonding effect of the fourth bonding member 800 can be further improved.

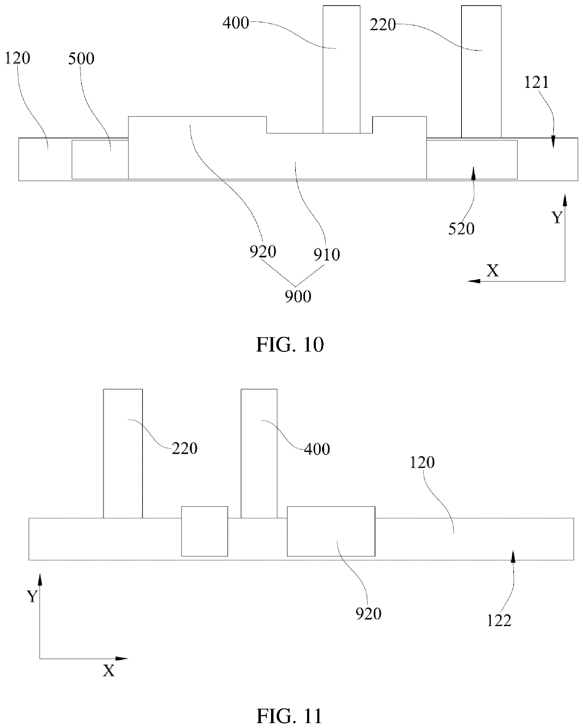

Referring to FIGs. 10 and 11, in some embodiments, the battery 10 further includes a fifth bonding member 900, where the fifth bonding member 900 includes a tenth part 910 and an eleventh part 920 connected to each other, the tenth part 910 covers and is bonded to a wall surface of the protection device 300 facing away from the second bonding member 600, and is bonded to the second bonding surface 520, and the eleventh part 920 is bonded to the second wall surface 122. In the above solution, the connection reliability of the protection device 300 can be improved, further reducing the probability of the protection device 300 separating from the shell 100.

In some embodiments, the eleventh part 920 covers and is bonded to a surface of the first tab 210 facing away from the second bonding member 600. In the above solution, the bonding effect of the fifth bonding member 900 can be further improved.

A second aspect of this application further provides an electronic device including the battery 10 provided in this application. The electronic device in this application is not particularly limited and may be any known electronic device used in the prior art. For example, the electronic device includes but is not limited to a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc, a transceiver, an electronic notebook, a calculator, a storage card, a portable recorder, a radio, a backup power supply, a motor, an automobile, a motorcycle, a motor bicycle, a bicycle, a lighting appliance, a toy, a game console, a clock, an electric tool, a flash lamp, a camera, a large household storage battery, or a sodium-ion capacitor.

It should be noted that although the preferred embodiments of this application are illustrated in this specification and accompanying drawings of this application, this application may be implemented in various forms and should not be construed as being limited to these embodiments described in this specification. These embodiments are not construed as additional limitations on the content of this application. These embodiments are provided for a more thorough and comprehensive understanding of the disclosed content of this application. Moreover, the above various technical features continue to be combined with each other to form various embodiments not listed above, all of which are considered to fall within the scope described in this specification of this application. Furthermore, persons of ordinary skill in the art can made improvements or modifications based on the above description, and all such improvements and modifications should fall within the protection scope of the appended claims of this application.

## Claims

1. A battery, comprising:
an electrode assembly comprising a first tab;
a shell, comprising a first main body part and a side edge part connected to the first main body part, wherein the electrode assembly is accommodated in the first main body part, the first tab passes through the side edge part and extends out of the shell, and the side edge part comprises a first wall surface and a second wall surface distributed opposite each other along its thickness direction;
a first bonding member comprising a first bonding surface and a second bonding surface disposed opposite each other, the first bonding surface being bonded to the first wall surface;
a protection device bonded to the second bonding surface, wherein the protection device comprises a second main body part and a first connecting part electrically connected to the second main body part, the first connecting part comprises a first part and a second part, the first part is bonded to the second bonding surface, and the second part is connected to a part of the first tab extending out of the shell and bent to be stacked with the first part; and
a second bonding member comprising a third part and a fourth part connected to each other, wherein the third part is bonded to a surface of the first part facing the second part, and the fourth part is bonded to the second bonding surface.

2. The battery according to claim 1, wherein
the second main body part and the first connecting part are distributed along a length direction of the side edge part, and along the length direction of the side edge part, the fourth part is bonded to a side of the first connecting part facing away from the second main body part.

3. The battery according to claim 2, wherein
along the length direction of the side edge part, a size H₁ of the fourth part satisfies 7 mm ≤ H₁ ≤ 12 mm.

4. The battery according to claim 1, wherein
the third part is at least partially bonded to a wall surface of the second main body part facing away from the first wall surface.

5. The battery according to claim 1, wherein
a surface of the second bonding member facing away from the first wall surface has adhesiveness, and a wall surface of the third part facing the second part is bonded to the second part.

6. The battery according to claim 1, wherein the protection device further comprises a second connecting part electrically connected to the second main body part, and the second connecting part is connected to the second bonding surface; and the battery further comprises:
a third connecting part, having an end electrically connected to the second connecting part and another end extending to a side of the side edge part facing away from the first main body part; and
a third bonding member comprising a fifth part and a sixth part connected to each other, wherein the fifth part is bonded to a position where the third connecting part is connected to the second connecting part, and the sixth part is bonded to the second bonding surface.

7. The battery according to claim 6, wherein
the second main body part and the second connecting part are distributed along a length direction of the side edge part, and along the length direction of the side edge part, the sixth part is bonded to a side of the second connecting part facing away from the second main body part.

8. The battery according to claim 7, wherein
along the length direction of the side edge part, a size H₂ of the sixth part satisfies 7 mm ≤ H₂ ≤ 12 mm.

9. The battery according to claim 6, wherein
the second bonding member and the third bonding member are integrally connected.

10. The battery according to claim 6, wherein
the battery further comprises a fourth bonding member, the fourth bonding member comprises a seventh part and an eighth part connected to each other, the seventh part is bonded to the second wall surface, and the eighth part covers and is bonded to a surface of the first tab facing away from the second bonding surface.

11. The battery according to claim 10, wherein
the eighth part is at least partially bonded to the second bonding surface.

12. The battery according to claim 10, wherein
the fourth bonding member further comprises a ninth part connected to the seventh part, and the ninth part is bonded to a surface of the sixth part facing away from the second bonding surface.

13. The battery according to claim 12, wherein
the ninth part is at least partially bonded to the second bonding surface.

14. The battery according to claim 6, wherein
the battery further comprises a fifth bonding member, the fifth bonding member comprises a tenth part and an eleventh part connected to each other, the tenth part covers and is bonded to a wall surface of the protection device facing away from the second bonding member, and is bonded to the second bonding surface, and the eleventh part is bonded to the second wall surface.

15. The battery according to claim 14, wherein
the eleventh part covers and is bonded to a surface of the first tab facing away from the second bonding member.

16. An electronic device, comprising the battery according to any one of claims 1 to 15.
